# EUROPEAN PATENT SPECIFICATION

(11) **EP 4 296 061 B1**
(45) Date of publication and mention of the grant of the patent: **11.11.2026**
(21) Application number: 23206993.0
(22) Date of filing: 14.12.2020
(51) Int. Cl.: B29C 70/44, B64C 3/18, B29D 99/00, B64C 1/06, B29C 65/00, B29C 70/30, B29C 70/86, B33Y 80/00, B29L 31/30

(54) **FLYAWAY STRINGER END CAPS**
FLYAWAY-STRINGER-ENDKAPPEN
EMBOUTS DE LONGERON VOLANT

(30) Priority: 12.12.2019 US 201916712089
(43) Date of publication of application: 27.12.2023
(62) Document number(s) of the earlier application(s) in accordance with Art. 76 EPC: 20213798.0 / 3 835 041
(73) Proprietor: The Boeing Company, Arlington, VA 22202 (US)
(72) Inventor: PARKER, Mary LeAnn, Chicago, IL 60606 (US); PHAM, Khanh Mai, Chicago, IL 60606 (US); CARLSON, Lisa Christina, Chicago, IL 60606 (US); HANSON, Garrett Charles, Chicago, IL 60606 (US)
(74) Representative: Hoffmann Eitle

(56) References cited:
- CA-A1- 2 829 899
- US-A1- 2012 100 343
- US-A1- 2018 001 590
- US-A1- 2018 001 991
- US-A1- 2019 366 653

## Description

### Field

The disclosure relates to the field of fabrication, and in particular, to fabrication of stringers for aircraft.

### Background

Stringers for an aircraft (e.g., the wings of an aircraft) may be fabricated from composite materials. These stringers may be laid-up as preforms, processed into stringers, and then co-cured to a wing skin in order to form a completed wing or portion thereof. When stringers are fabricated in this manner, the stringers are laid-up and cured such that they terminate within the wing skin. The stringers can then be cut to desired dimensions at desired ramp rates after curing has completed. The transition from stringer to skin is commonly referred to as a "stringer run-out" and is utilized for transferring load in composite wing structures.

Fabricating a stringer made of composite materials in this manner may result in edge conditions which are out of tolerance or, and out of tolerance conditions are undesirable as they may necessitate rework. At the same time, it may be difficult to lay up and cure a preform at desired ramp rates, owing to the complex geometries that may be required.

Therefore, it would be desirable to have a method and apparatus that take into account at least some of the issues discussed above, as well as other possible issues.

US 2019/366653 A1, in accordance with its abstract, states systems and methods for composite part fabrication. A method includes selecting an end caul comprising a structure of sintered material surrounding volumes of unsintered particles, creating a laminate comprising fibers within a resin matrix, placing the end caul in contact with an end of the laminate, and processing the laminate. Paragraphs [0027-0029] of US 2019/366653 A1 state:
"End caul 100 includes base 110 , which provides mechanical support to a base (and/or flanges) of a laminate that will be cured. Base 110 includes flanges 130 which project laterally. End caul 100 also includes a vertical element in the form of web 120, which projects vertically from base 110 and provides mechanical support to a projecting portion of the blade stringer. End caul 100 includes multiple features that facilitate vacuum bag curing of a laminate precursor of the blade stringer into a composite part. For example, end caul 100 includes ridge 112 and ridge 114 . Ridge 112 and ridge 114 divide base 110 into terrace 116 and terrace 118 . When a vacuum bag is placed over end caul 100 , these ridges prevent bow waves of pressure from reaching the laminate during curing because any bow waves are trapped at the ridges in the caul plate. Because there are multiple ridges, load applied by a vacuum bag is distributed across the ridges, and the frequency and magnitude of the bow waves is therefore reduced at each ridge. This may also help to reduce wrinkle formation at the vacuum bag, also resulting in reducing the frequency and magnitude of bow waves. In short, when base 110 has a "softer" and more gradual the footprint, the bow waves are eliminated more effectively. By reducing the frequency and magnitude of bow waves, resin pooling is reduced. This is beneficial because resin pooling in one region may result in a starved matrix that lacks resin, or has increased porosity, at other regions. Resin pooling is also undesirable because it may reduce the fiber volume of a composite part out of a desired tolerance range. Resin starved and high-porosity regions may also have a fiber volume that is out of a desired tolerance range.
Each terrace follows a predetermined contoured pattern, and the shape of each terrace may vary depending on how pressure is desired to be transitioned by end caul 100 . For example, more terraces may be utilized to reduce the amount of pressure applied to each terrace by a vacuum bag. If many terraces are desired, the length or width of base 110 may be increased, in order to provide a longer "ramp" (i.e., transition zone) across which pressure is distributed. End caul 100 also includes upper surface 122, which is curved to provide a smooth surface that will not rip or tear a vacuum bag when curing temperatures (e.g., hundreds of degrees Fahrenheit) and pressures (e.g., ninety pounds per square inch) are applied. For example, upper surface 122 may comprise a chamfer that has a taper angle between thirty and forty-five degrees, and that also has rounded corners. These features of the taper angle help to prevent a vacuum bag from tearing when it is drawn around end caul 100 .

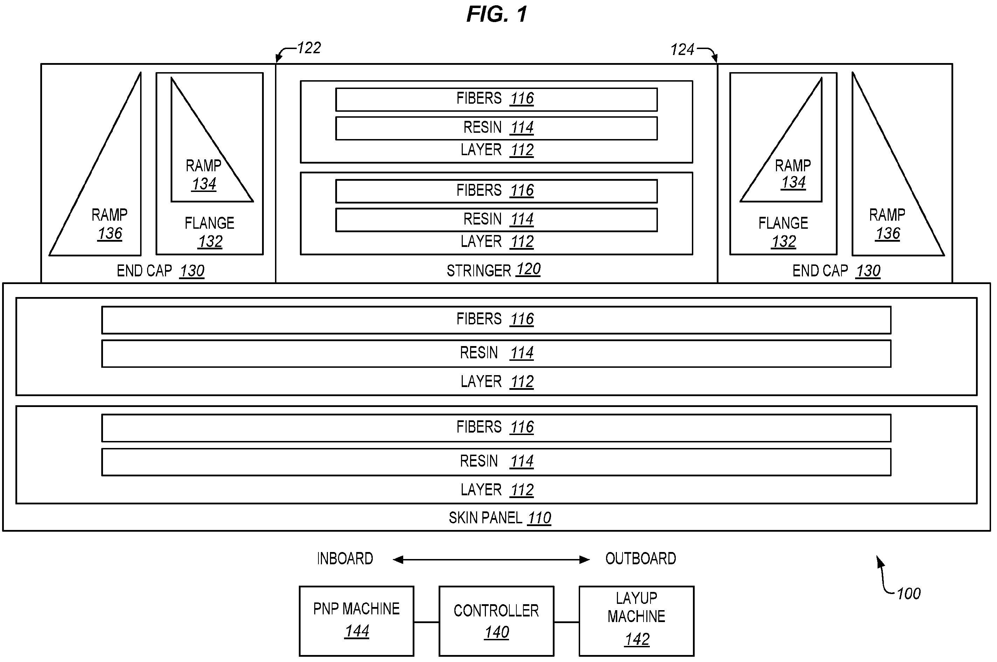

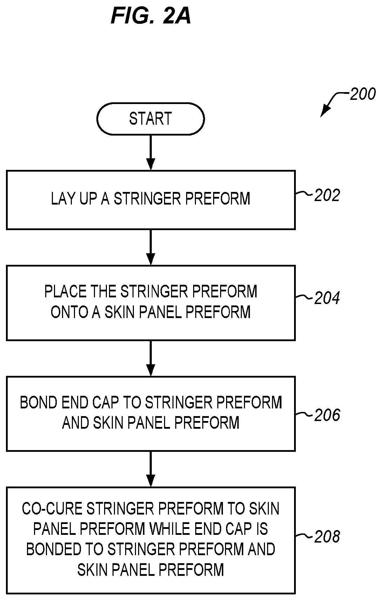

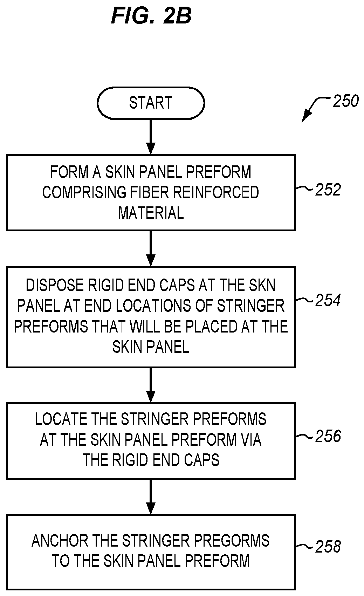

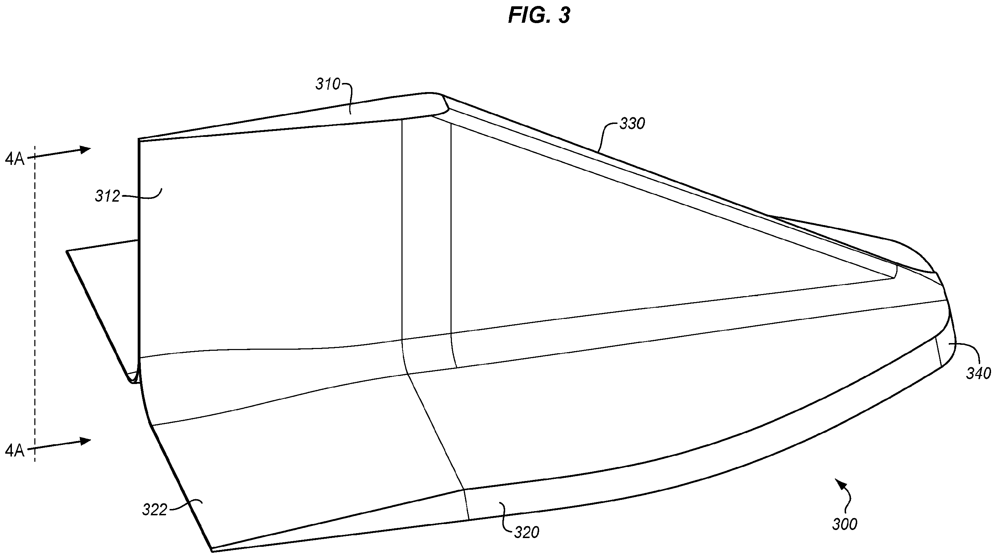

FIG. 2 is a side view of end caul 100 that further illustrates the features discussed above. FIG. 2 corresponds with view arrows 2 of FIG. 1, and illustrates that base 110 has a height H that equals a height of a base of a laminate. FIG. 3 is a front view of end caul 100 that corresponds with view arrows 3 of FIG. 1, and calls out fillets 300 , which provide a smooth transition from web 120 to base 110. This curvature provides a benefit during curing by preventing tearing of any vacuum bag placed over end caul 100 . FIG. 3 also depicts face 310 , which will contact an end profile of the laminate during curing and is placed against the end profile of the laminate during curing in order to provide mechanical support. While face 310 is shown flat, in further embodiments it is possible for face 310 to have a contour and/or facets within it, such as from top to bottom or from side to side. As shown in FIG. 3, web 120 of end caul 100 has a thickness T equal to a thickness of the laminate that will be cured. In further embodiments, thickness T may taper to match a thickness of a corresponding end of a laminate."

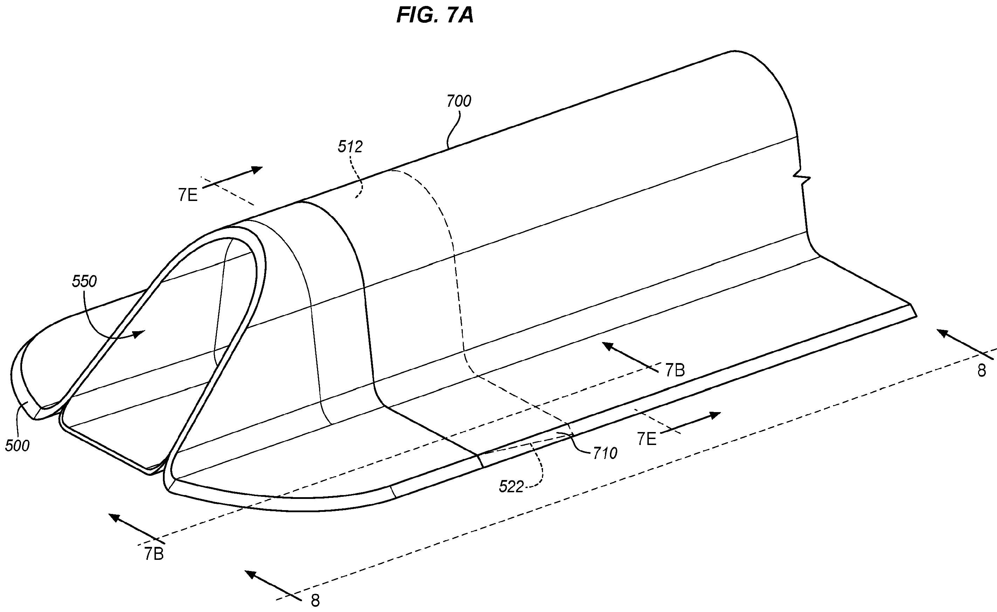

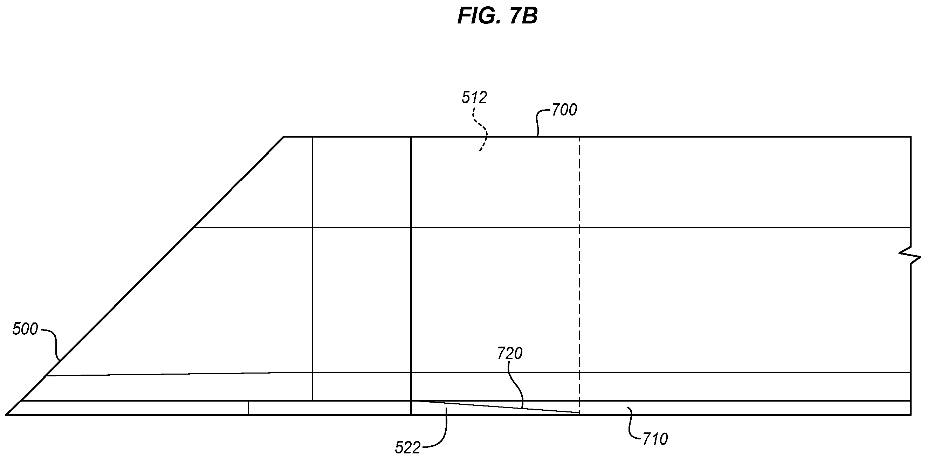

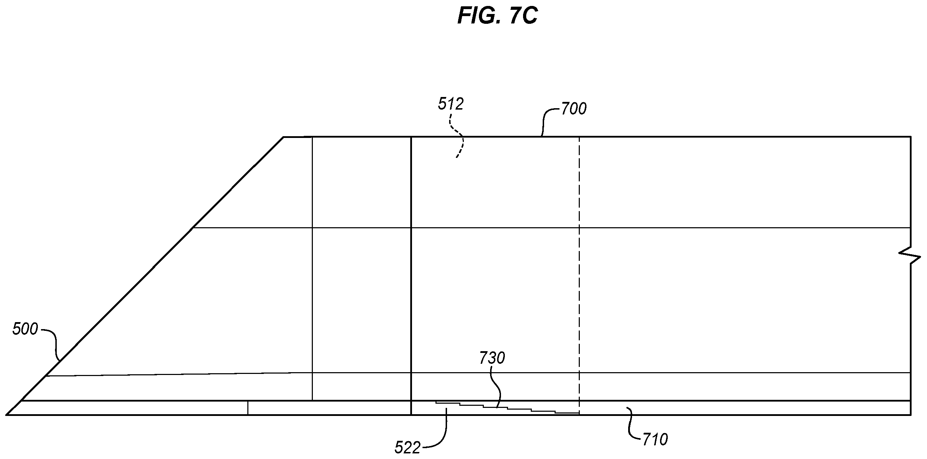

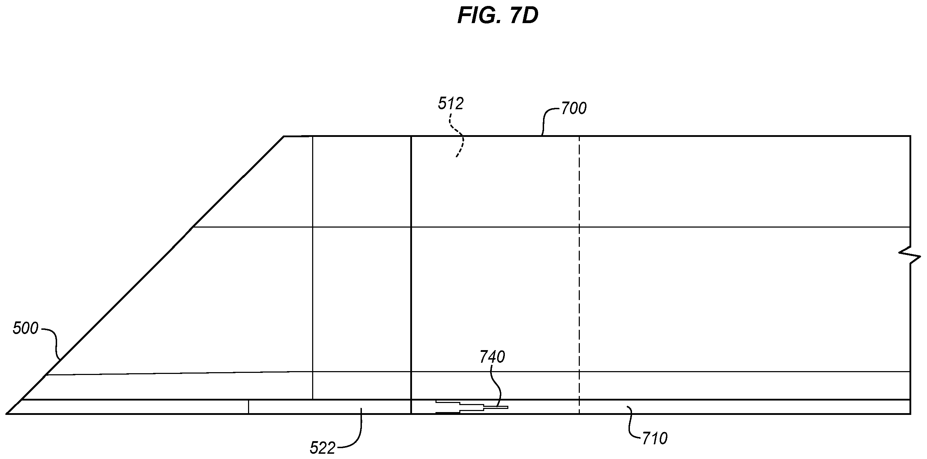

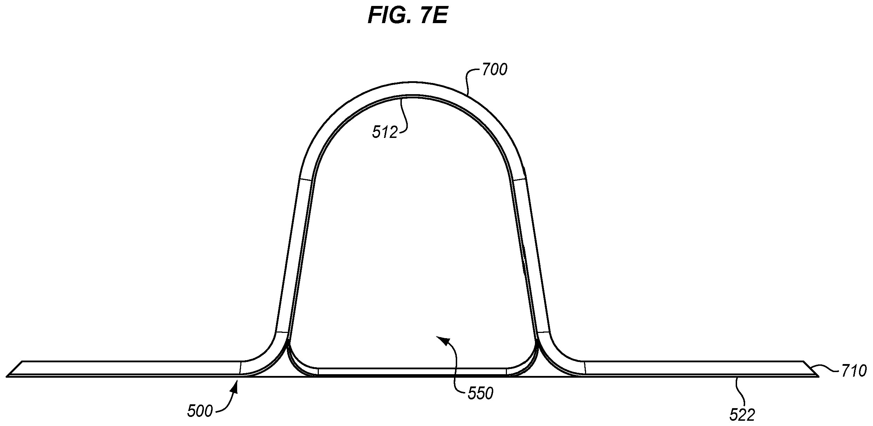

US 2018/001991 A1, in accordance with its abstract, states a stiffener comprising a first stiffener portion, having a first cross-sectional profile that is constant along the first stiffener portion. The stiffener also comprises a second stiffener portion, having a second cross-sectional profile that is constant along the second stiffener portion. The second cross-sectional profile of the second stiffener portion is different from the first cross-sectional profile of the first stiffener portion. The stiffener 100 additionally comprises a transition stiffener portion tapering from the second stiffener portion to the first stiffener portion. Paragraphs [0045, 0046, 0052, 0059, 0060, 0061] of US 2018/001991 A1 state:
Referring, e.g., to FIGS. 1A, 1B, 2-5 and 22, stiffener 100 , is disclosed. Stiffener 100 comprises first stiffener portion 102 , having first cross-sectional profile 104 that is constant along first stiffener portion 102 . Stiffener 100 also comprises second stiffener portion 106 , having second cross-sectional profile 108 that is constant along second stiffener portion 106 . Second cross-sectional profile 108 of second stiffener portion 106 is different from first cross-sectional profile 104 of first stiffener portion 102 . Stiffener 100 further comprises transition stiffener portion 110 , tapering from second stiffener portion 106 to first stiffener portion 102 . The preceding subject matter of this paragraph characterizes example 1 of the present disclosure.
First stiffener portion 102 and second stiffener portion 106 enable a single continuous stiffener 100 to have different cross-sectional profiles and/or dimensions, which provide different structural characteristics, for example, size, shape and/or load bearing characteristics. Transition stiffener portion 110 effectively transfers a load between first stiffer portion 102 and second stiffener portion 106 .
A trapezoidally shaped first cross-sectional profile **104** of first stiffener portion **102** of stiffener **100** enables first stiffener portion **102** to suitably react to bending loads primarily due to tension loading, while also providing a relatively short profile height.
Referring generally to **FIGS. 1A and 1B** and particularly to, e.g., **FIG. 7****,** second cross-sectional profile **108** of second stiffener portion **106** is I-shaped.
An I-shaped second cross-sectional profile **108** of second stiffener portion **106** of stiffener **100** enables second stiffener portion **106** to suitably react to bending loads primarily due to compression loading, while also providing a relatively tall profile height and/or a high cross-section moment of inertia.
As used herein, the term "I-shaped" refers to a shaped member having a first (e.g., substantially vertical) portion, a second (e.g., substantially horizontal) portion substantially perpendicularly coupled to a first end of the first portion, and a third (e.g., substantially horizontal) portion substantially perpendicularly coupled to a second end (opposite the first end) of the first portion. The second portion extends laterally outward in opposite directions, for example, equidistantly, from the first end of the first portion. The third portion extends laterally outward in opposite directions, for example, equidistantly, from the second end of the first portion."

### Summary

The presently-claimed invention concerns an apparatus according to claim 1 and a method according to claim 14.

Embodiments described herein provide rigid end caps for stringers that exhibit desired ramp rates and stringer run-out quality for terminating a stringer. These end caps are affixed to preforms for the stringers to form integral portions of a composite part. The end caps eliminate the need to shape the preforms to specified ramp rates, while also eliminating the need to cut the stringers after curing. The end caps form flyaway tooling that enforces desired shapes onto stringers during curing, while also bearing and transferring loads within the wing after the wing has been fabricated. One embodiment is a method of forming a stringer. The method, for illustrative purposes, includes laying up a stringer preform comprising fiber-reinforced material, placing the stringer preform onto a skin panel preform, bonding an end cap to the stringer preform and the skin panel preform, and co-curing the stringer preform and the skin panel preform while the end cap is bonded to the stringer preform and the skin panel preform, resulting in a composite part that includes the end cap.

A further embodiment, for illustrative purposes, is a non-transitory computer readable medium embodying programmed instructions which, when executed by a processor, are operable for performing a method for forming a stringer. The method includes laying up a stringer preform comprising fiber-reinforced material, placing the stringer preform onto a skin panel preform, bonding an end cap to the stringer preform and the skin panel preform, and co-curing the stringer preform and the skin panel preform while the end cap is bonded to the stringer preform and the skin panel preform, resulting in a composite part that includes the end cap.

A further embodiment, for illustrative purposes is an article of manufacture. The article includes a composite part. the composite part includes a skin panel of fiber-reinforced material, stringers of the fiber-reinforced material that are co-cured to the skin panel, and end caps that are co-bonded to the stringers and the skin panel, and that include ramps which are overlapped with fiber reinforced material from the stringers.

A further embodiment, for illustrative purposes, is an end cap for a stringer. The end cap includes a flange, a ramp that extends from the flange and tapers the flange, a web that protrudes from the flange, and a ramp that extends from the web and tapers the web.

A further embodiment, for illustrative purposes, is a method for fabricating a composite part, the method comprising forming a skin panel preform, bonding a caul tooling end onto the skin panel preform, anchoring a stringer preform at the skin panel preform and the caul tooling end, and co-curing the skin panel preform and the stringer preform with the caul tooling end.

A further embodiment, for illustrative purposes, is an apparatus in the form of flyaway tooling for an aircraft. The apparatus includes an end cap comprising a flange, a ramp that extends from the flange and tapers the flange, a web that protrudes from the flange, and a ramp that extends from the web and tapers the web. The end cap supports a preform for a stringer during fabrication, and is integrated into a completed stringer as a component of the aircraft.

According to an aspect of the present disclosure, for illustrative purposes, disclosed herein is a method of forming a stringer, the method comprises:
laying up a stringer preform comprising fiber-reinforced material (202);
placing the stringer preform onto a skin panel preform (204);
bonding an end cap to the stringer preform and the skin panel preform (206); and
co-curing the stringer preform and the skin panel preform while the end cap is bonded to the stringer preform and the skin panel preform, resulting in a composite part that includes the end cap (208).

Preferably, the method is one wherein:
the end cap is bonded to an outboard end of the stringer preform, and the method further comprises:
bonding another end cap to an inboard end of the stringer preform.

Preferably, the method further comprises:
overlapping a ramp of the end cap with the stringer preform.

Preferably, the method further comprises:
transferring load to the end cap via a ramp selected from the group consisting of step laps, linear ramps, scarfing, and interleaving.

Preferably, the method further comprises:
assembling the composite part into a portion of an airframe of an aircraft, such that the end cap becomes flyaway tooling.

Preferably, the method further comprises:
fabricating the end caps via additive manufacturing.

Preferably, the method further comprises:
vacuum bagging the end cap, stringer preform, and skin panel preform, prior to the co-curing.

Preferably, the method is one wherein:
the end cap is bonded to an outboard end of the stringer preform and fastened to a wing panel.

Preferably, the method is one wherein:
the end cap is bonded to an outboard end of the stringer preform and fastened to a wing panel, and the method further comprises:
bonding another end cap to an inboard end of the stringer preform and fastening the other end cap to the wing panel.

Preferably, the portion of an aircraft assembled according to the method as described above.

According to an aspect of the present disclosure, for illustrative purposes, disclosed herein is a non-transitory computer readable medium embodying programmed instructions which, when executed by a processor, are operable for performing a method for forming a stringer, the method comprises:
laying up a stringer preform comprising fiber-reinforced material (202);
placing the stringer preform onto a skin panel preform (204);
bonding an end cap to the stringer preform and the skin panel preform (206); and
co-curing the stringer preform and the skin panel preform while the end cap is bonded to the stringer preform and the skin panel preform, resulting in a composite part that includes the end cap (208).

Preferably, the medium is one wherein:
the end cap is bonded to an outboard end of the stringer preform, and the method further comprises:
bonding another end cap to an inboard end of the stringer preform.

Preferably, the medium is one wherein the method further comprises:
overlapping a ramp of the end cap with the stringer preform.

Preferably, the medium is one wherein:
transferring load to the end cap via a ramp selected from the group consisting of step laps, linear ramps, scarfing, and interleaving.

Preferably, the medium is one wherein the method further comprises:
assembling the composite part into a portion of an airframe of an aircraft, such that the end cap becomes flyaway tooling.

Preferably, the medium is one wherein the method further comprises:
fabricating the end caps via additive manufacturing.

Preferably, the medium is one wherein the method further comprises:
vacuum bagging the end cap, stringer preform, and skin panel preform, prior to the co-curing.

Preferably, the medium is one wherein:
the end cap is bonded to an outboard end of the stringer preform and fastened to a wing panel.

Preferably, the medium is one wherein:
the end cap is bonded to an outboard end of the stringer preform and fastened to a wing panel, and the method further comprises:
bonding another end cap to an inboard end of the stringer preform and fastening the other end cap to the wing panel.

Preferably, a portion of an aircraft assembled according to the method defined by the instructions stored on the computer readable medium.

According to an aspect of the present disclosure, for illustrative purposes, disclosed herein is an article of manufacture comprises:
a composite part (100) comprising:
   a skin panel (110) of fiber-reinforced material;
   stringers (120) of the fiber-reinforced material that are co-cured to the skin panel; and
end caps (130) that are co-bonded to the stringers , and that include ramps (134) which are spliced with fiber reinforced material from the stringers.

Preferably, the article is one wherein:
the ramps comprise at least one selected from the group consisting of step lap ramps, scarf lamps, and interleaving.

Preferably, the article is one wherein:
the end caps have a hat-shaped cross-section that aligns with a hat-shaped cross section of the stringers.

Preferably, the article is one wherein:
the end caps are also co-bonded to the skin panel

Preferably, the article is one wherein:
the ramps are spliced with the fiber reinforced material from the stringers.

Preferably, the article is one wherein:
the end caps have a cross-section in the form of a T, Z, or J that aligns with a cross section of the stringers.

Preferably, the article is one wherein:
the end caps are made from at least one of Carbon Fiber Reinforced Polymer (CFRP) or metal.

Preferably, the article is one wherein:
the fiber-reinforced material comprises Carbon Fiber Reinforced Polymer (CFRP).

Fabricating a portion of an aircraft using the article described above is disclosed for illustrative purposes.

According to an aspect of the present disclosure, for illustrative purposes, disclosed herein is an apparatus in the form of an end cap for a stringer, the end cap comprises:
a flange (320);
a ramp (322) that extends from the flange and tapers the flange;
a web (310) that protrudes from the flange; and
a ramp (312) that extends from the web and tapers the web.

Advantageously, the apparatus is one wherein:
a cross section of the end cap is selected from the group consisting of "T" shapes and hat shapes.

Preferably, the apparatus is one wherein:
the web forms a curved shape.

Preferably, the apparatus is one wherein:
the end cap is made from at least one of Carbon Fiber Reinforced Polymer (CFRP) or metal.

Preferably, the apparatus is one wherein:
the end cap includes mounting features in a flange.

Preferably, the apparatus is one wherein:
the end cap includes mounting features in a web.

Fabricating a portion of an aircraft using the apparatus discussed above.

According to an aspect of the present disclosure, a method for fabricating a composite part, the method comprises:
forming a skin panel preform (1202);
bonding a caul tooling end onto the skin panel preform (1204);
anchoring a stringer preform at the skin panel preform and the caul tooling end (1206); and
co-curing the skin panel preform and the stringer preform with the caul tooling end (1208).

Advantageously, the method further comprises:
vacuum bagging the stringer preform, the caul tooling end, and the skin panel preform.

Preferably, the method further comprises:
hardening the stringer preform, the caul tooling end, and the skin panel preform into a composite part.

Preferably, the method is one wherein:
hardening comprises curing the stringer preform, the caul tooling end, and the skin panel preform into a composite part while applying pressure.

Preferably, the method is one wherein:
the caul tooling end forms flyaway tooling that structurally supports ends of a stringer.

Preferably, the method is one wherein:
the caul tooling end comprises a material selected from the group consisting of metal and Carbon Fiber Reinforced Polymer (CFRP).

A portion of an aircraft assembled according to the method as described above is disclosed for illustrative purposes.

According to an aspect of the present disclosure, for illustrative purposes, disclosed herein is an apparatus in the form of flyaway tooling for an aircraft, the apparatus comprises:
an end cap (300) comprising:
a flange (320);
   a ramp (322) that extends from the flange and tapers the flange;
   a web (310) that protrudes from the flange; and
   a ramp (312) that extends from the web and tapers the web,
the end cap supports a preform for a stringer during fabrication, and is integrated into a completed stringer as a component of the aircraft.

Advantageously, the apparatus is one wherein:
the web forms a curved shape.

Preferably, the apparatus is one wherein:
the end cap is made from at least one of Carbon Fiber Reinforced Polymer (CFRP) or metal.

Preferably, the apparatus is one wherein:
the end cap has a hat shaped cross section.

Preferably, the apparatus is one wherein:
the end cap has a T shaped cross section.

Fabricating a portion of an aircraft using the apparatus as described is disclosed for illustrative purposes.

Other illustrative embodiments (e.g., methods and computer-readable media relating to the foregoing embodiments) may be described below. The features, functions, and advantages that have been discussed can be achieved independently in various embodiments or may be combined in yet other embodiments further details of which can be seen with reference to the following description and drawings.

### Description of the Drawings

Some embodiments of the present disclosure are now described, by way of example only, and with reference to the accompanying drawings. The same reference number represents the same element or the same type of element on all drawings.
FIG. 1 is a block diagram of one half of a wing that includes co-cured stringers and flyaway tooling in an illustrative embodiment.
FIG. 2A is a flowchart illustrating a method for integrating flyaway tooling into a wing in an illustrative embodiment.
FIG. 2B is a flowchart illustrating a method for integrating flyaway tooling into a wing in an illustrative embodiment.
FIGS. 3 and 4A-4C illustrate an end cap for a first stringer shape in an illustrative embodiment.
FIGS. 5-6 illustrate an end cap for a second stringer shape in an illustrative embodiment.
FIGS. 7A-7E and 8 illustrate a co-bonded end cap and stringer in an illustrative embodiment.
FIG. 9 is a perspective view of a wing that includes flyaway tooling in an illustrative embodiment.
FIG. 10 illustrates an inboard end cap for a stringer in an illustrative embodiment.
FIG. 11 is a block diagram illustrating inboard end caps for stringers integrated into an airframe in an illustrative embodiment.
FIG. 12 is a further flowchart illustrating a method for integrating flyaway tooling into a wing in an illustrative embodiment.
FIG. 13 is a flow diagram of aircraft production and service methodology in an illustrative embodiment.
FIG. 14 is a block diagram of an aircraft in an illustrative embodiment.

### Description

The figures and the following description provide specific illustrative embodiments of the disclosure. It will thus be appreciated that those skilled in the art will be able to devise various arrangements that, although not explicitly described or shown herein, embody the principles of the disclosure and are included within the scope of the disclosure. Furthermore, any examples described herein are intended to aid in understanding the principles of the disclosure, and are to be construed as being without limitation to such specifically recited examples and conditions. As a result, the disclosure is not limited to the specific embodiments or examples described below, but by the claims.

Composite parts, such as Carbon Fiber Reinforced Polymer (CFRP) parts, are initially laid-up in multiple layers that together are referred to as a preform. Individual fibers within each layer of the preform are aligned parallel with each other, but different layers exhibit different fiber orientations in order to increase the strength of the resulting composite part along different dimensions. The preform includes a viscous resin that solidifies in order to harden the preform into a composite part (e.g., for use in an aircraft). Carbon fiber that has been impregnated with an uncured thermoset resin or a thermoplastic resin is referred to as "prepreg." Other types of carbon fiber include "dry fiber" which has not been impregnated with thermoset resin but may include a tackifier or binder. Dry fiber is infused with resin prior to curing. For thermoset resins, the hardening is a one-way process referred to as curing, while for thermoplastic resins, the resin reaches a viscous form if it is re-heated.

FIG. 1 is a block diagram of a lower half of a wing 100 that includes co-cured stringers and flyaway tooling in an illustrative embodiment. The lower half of the wing 100 illustrated in FIG. 1 may comprise a co-cured lower half of a wing, and is capable of being affixed or bonded to an upper half of a wing in order to form a complete wing. In further embodiments, an upper half of a wing is assembled in a similar manner to that of the lower half of the wing 100. The lower half of a wing 100 depicted in FIG. 1 includes fiber-reinforced composite materials as well as rigid end caps for stringers. This arrangement eliminates the need for trimming or cutting the stringers at the wing 100 after hardening.

In this embodiment, FIG. 1 depicts a portion of a wing that includes a skin panel 110, which comprises fiber-reinforced material in the form of multiple layers 112 of resin 114 and fibers 116. A stringer 120 is disposed atop the skin panel 110, and comprises fiber-reinforced material in the form of layers 112 of fibers 116 and resin 114. The stringer 120 is co-cured to the skin panel 110.

End caps 130 abut the inboard end 122 and outboard end 124 of the stringer 120. The end caps 130 are rigid prior to curing, and may comprise a metal that provides high strength with low weight, such as titanium or aluminum (e.g., isolated from carbon fiber by isolation plies of fiberglass or other material). End caps 130 may further comprise hardened composite materials (e.g., thermoset or thermoplastic), as well as 3D-printed metals. Thus, in one embodiment the end caps 130 are fabricated via additive manufacturing techniques, such as 3D printing. In further embodiments, subtractive manufacturing techniques are utilized. Each end cap 130 includes a flange 132 with a ramp 134 for receiving the stringer 120. The end caps 130 are bolted and/or bonded to the stringer 120 and/or skin panel 110.

The ramp 134 provides a pathway for transferring load from the stringer 120 to the end cap 130. As used herein, a "ramp" refers to any physical structure that transitions load along its length, including step laps, scarfing, interleaving, linear ramps, and other features. The stringer 120 itself includes a flange and web, and these structures are complementary to the ramp 134 of the end cap 130. Each end cap 130 also includes a ramp 136 that proceeds down to the skin panel 110. The ramp 136 provides a pathway for transferring load from the end cap 130 to the skin panel 110.

The end caps 130 are co-bonded to the stringers 120 and the skin panel 110, and the ramps 134 of the end caps 130 are overlapped with fiber-reinforced material from the stringers 120 in one embodiment. In further embodiments, the ramps 134 and/or 136 integrate with stringers 120 via laps, step laps, or scarf interleaving of the ramps with the plies of the stringer and/or skin panel 110. In some of these embodiments, the transitions involve laying up a stinger preform upon an end cap 130 to accommodate differences in shape. The terms of "skin panel 110" and "stringer 120" are utilized herein to refer to both uncured preforms as well as hardened composite parts. That is, a skin panel 110 may refer to an unhardened preform for a skin panel awaiting curing, or may refer to a hardened skin panel. In a similar fashion, a stringer 120 may refer to an unhardened preform for a stringer, or to a hardened stringer.

FIG. 1 further depicts components which may be electronically managed by controller 140 to fabricate the structure discussed above. In this embodiment, the components include a layup machine 142, such as an Automated Fiber Placement (AFP) machine or tape dispensing head that lays up tows of unidirectional fiber-reinforced material to form the layers 112. The components further include a Pick and Place (PNP) machine 144 (e.g., an end effector, suction device, gripper, etc.), which picks up and places stringer preforms and/or end caps 130 onto skin panel 110. In further embodiments, the stringer preforms and end caps 130 are manually picked and placed into position by one or more technicians. Controller 140 directs the operations of these components based on instructions stored in one or more Numerical Control (NC) programs in memory, and may be implemented, for example, as custom circuitry, as a hardware processor executing programmed instructions, or some combination thereof.

Illustrative details of the operation of the components of FIG. 1 will be discussed with regard to FIG. 2A. Assume, for this embodiment, that a skin panel preform (e.g., skin panel 110) for a wing has been laid-up by layup machine 142.

FIG. 2A is a flowchart illustrating a method 200 for integrating flyaway tooling into a wing in an illustrative embodiment. The steps of method 200 are described with reference to the lower half of a wing 100 shown in FIG. 1, but those skilled in the art will appreciate that method 200 may be performed for other portions of wings (e.g., upper halves of wings) in other environments. The steps of the flowcharts described herein are not all inclusive and may include other steps not shown. The steps described herein may also be performed in an alternative order.

In step 202, controller 140 directs layup machine 142 to lay up the stringer preform. In one embodiment, this comprises applying multiple layers of unidirectional fiber-reinforced material to a layup mandrel (not shown) or other piece of tooling that defines a shape for the stringer preform.

In one embodiment, the PNP machine 144 places an end cap 130 at each end of the stringer preform. The end caps 130 help to enforce a desired shape at the stringer preform before and during curing. Furthermore, the end caps 130 provide ramps 136 (e.g., for runouts) and/or other complex geometries in a rigid form, which means that these geometries do not need to be mechanically supported during the curing process. This reduces the complexity of layup and curing for the wing, which reduces expenses related to labor and materials.

In step 204, controller 140 directs the PNP machine 144 to place the stringer preform onto a skin panel preform (e.g., skin panel 110). During this operation, the stringer preform has not yet been cured (i.e., is still in the "green state") and therefore remains flaccid. The PNP machine 144 may therefore enforce or retain a desired curvature at the stringer preform via the application of suction (e.g., via a vacuum connection) or use of supporting structure while the stringer preform is being transported. In one embodiment, the PNP machine 144 picks up and places multiple stringer preforms at the skin panel preform. This may also include placing a stringer preform onto a layup mandrel and then laying up the skin against the stringer preform. For a skin panel that defines an upper portion of a wing, the stringers may comprise preforms for hat stringers. For a skin panel that defines a lower portion of a wing, the stringers may comprise preforms for "T" stringers. Further types of stringers include Z stringers, and stringers of any suitable cross-section. In one embodiment, the placement operation involves overlapping a ramp 134 of the end cap 130 with one or more layers of the stringer preform. This may comprise overlapping the ramp 134 with a ramp at the stringer preform. In this manner, after the stringer preform hardens, the ramp 134 transfers loads between the hardened stringer and the end cap 130. Meanwhile the ramp 136 transfers loads between the end cap 130 and the skin panel 110.

Step 206 comprises bonding an end cap 130 to the stringer preform and the skin panel preform. In one embodiment, this comprises applying an adhesive (e.g., an epoxy, glue, or other self-hardening chemical) to the end caps 130 prior to placing the end caps or the stringer preforms onto the skin panel preform, and waiting for the adhesive to harden after placing the end caps and stringer preform into position. In one embodiment, an end cap 130 is bonded to an outboard end of the stringer preform, and another end cap 130 is bonded to an inboard end of the stringer preform.

After the end caps 130 have been bonded into place, the position of end caps 130 with regard to the stringer preform and the skin panel preform is held in place by the hardened adhesive. This ensures that vacuum bagging setup and consolidation will not shift the position of the stringer preforms, skin panel preform, and end caps with respect to each other. Thus, PNP machine 144, another machine, or a technician, may proceed to vacuum bag the end cap, stringer preform, and skin panel preform (i.e., prior to co-curing these elements together). The end caps both anchor the stringer preforms to the skin panel preform, and locate the stringers at the skin panel preform. In one embodiment, the vacuum bag is utilized to consolidate these components via the application of pressure, prior to curing.

Step 208 comprises co-curing the stringer preform to the skin panel preform while the end caps 130 are bonded to the stringer preform and the skin panel preform, resulting in a composite part that includes the end caps 130 as integral components. In one embodiment, co-curing comprises placing the vacuum-bagged components into an autoclave, applying heat via the autoclave until resin 114 reaches a curing temperature, and applying pressure via the vacuum bag and/or via the autoclave in order to consolidate and cure the end caps 130, stringer preforms, and skin panel preform. These components are co-cured into an integral composite part that includes integral flyaway tooling. That is, the end caps 130 operate as tooling to provide support for the preforms during curing and vacuum bagging, and also provide mechanical strength when the resulting portion of wing is assembled into a portion of an airframe of an aircraft. The tooling becomes physically integral with stringers after hardening. Therefore, the tooling is flyaway tooling because it is integrated into an aircraft and "flies away" as part of the aircraft after fabrication has completed.

Method 200 provides a technical benefit over prior techniques, because it enables a runout to be rapidly integrated into a composite stringer, provides support during vacuum bagging and curing. This is because the end caps, being rigid prior to curing, resist compaction forces applied by a vacuum bag that could crush or bend elongated portions such as a web of a stringer preform. Hence, the end caps help to constrain stringer preforms to desired shapes during curing. Method 200 additionally eliminates the need to cut or remove material from a composite stringer after the composite stringer has been co-cured to a skin panel.

FIG. 2B illustrates a method 250 for integrating flyaway tooling into a wing in an illustrative embodiment. Method 250 comprises forming (e.g., laying up) a skin panel preform comprising fiber reinforced material (e.g., CFRP) in step 252,disposing rigid end caps at the skin panel preform at end locations of stringer preforms (e.g., laid-up from CFRP) that will be placed at the skin panel in step 254, locating the stringer preforms at the skin panel preform via the rigid end caps in step 256, and anchoring the stringer preforms to the skin panel preform in step 258.

In a further embodiment, method 250 includes consolidating the stringer preforms and the skin panel preform via a vacuum bag that covers the stringer preforms, skin panel preform, and end caps. Method 250 may further comprise hardening the stringer preforms and the skin panel preform to form a section of wing that includes the end caps. The end caps are bonded to the stringer preforms and the skin panel preform, and in one embodiment the method 250 further comprises co-curing the stringer preform and the skin panel preform while the rigid end caps are bonded to the stringer preform and the skin panel preform, resulting in a composite part that includes the end cap.

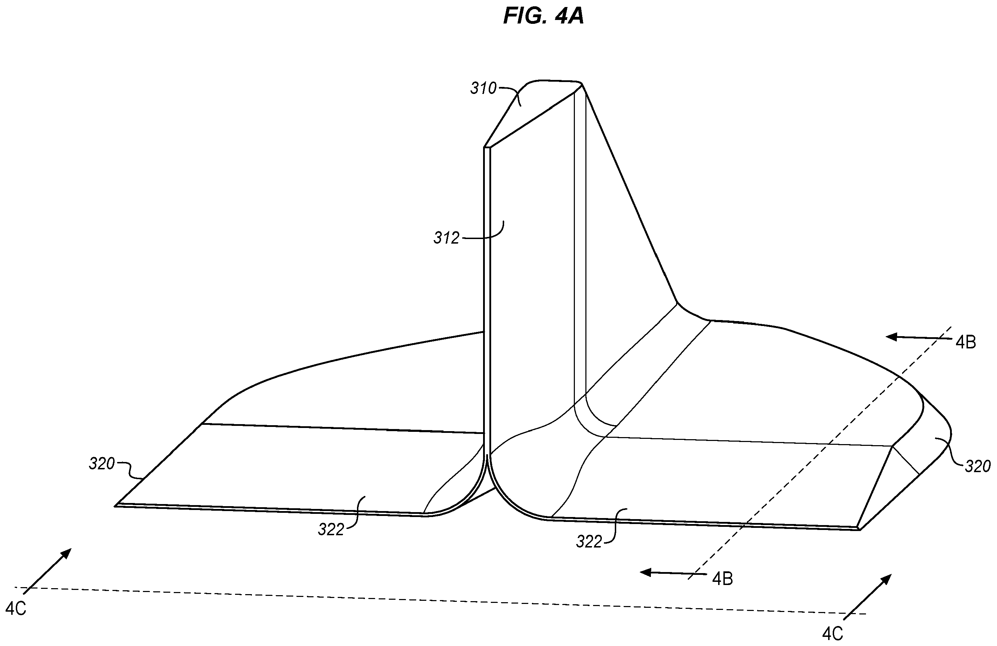

FIGS. 3 and 4A-4C illustrate an end cap 300 for a first stringer shape in an illustrative embodiment. FIG. 4A corresponds with view arrows 4A of FIG. 3. In this embodiment, the end cap 300 is designed as an end cap for a stringer having a T-shaped cross-section. That is, the end cap 300 has a T-shaped cross-section that aligns with a T-shaped cross section of a stringer.

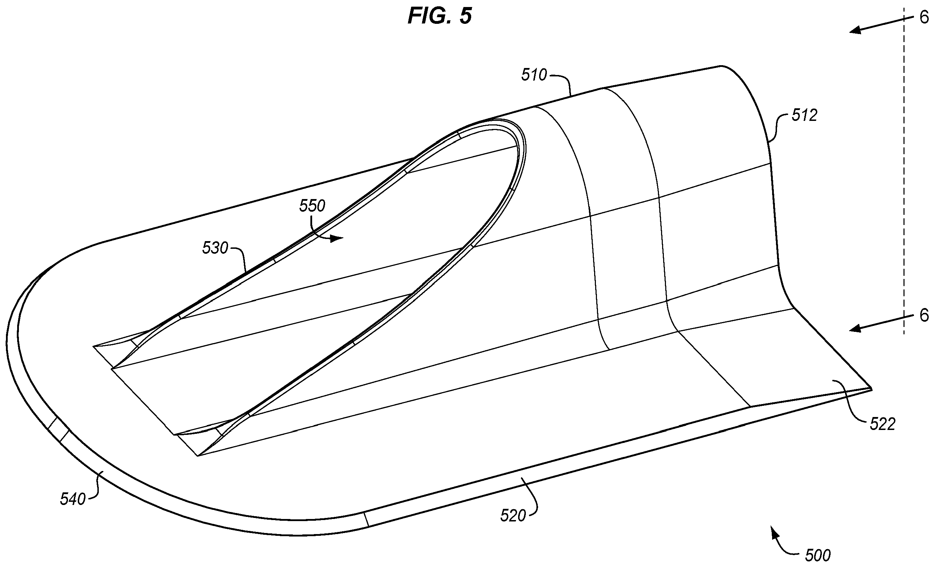

The end cap 300 includes a web 310 which narrows via ramp 312, which extends from the web 310 and tapers the web 310. In this embodiment, the web 310 forms a vertical plane. However, in further embodiments the web forms a curved shape (e.g., as shown in FIG. 5). The web 310 protrudes from a lower flange 320. Lower flange 320 narrows via ramp 322, which extends from the lower flange 320 and tapers the lower flange 320. These ramps 312 and 322 are overlapped by corresponding ramps in the stringer preform, such that an overall thickness of the combination of flange and stringer preform remains constant along the flange. In further embodiments, the ramps exhibit a stairstep pattern that accommodates a step lap or other type of interface/transition between the stringer and the end cap. In still further embodiments, interleaving of composite plies with metallic structure is performed to narrow the structure instead of narrowing in a linear ramped fashion. Ramp 330 terminates the stringer in accordance with desired structural constraints, and is shaped and tapered to help transition the stringer load through the end cap to the panel. Ramp 340 transfers forces through the end cap 300 into a skin panel (not shown). Meanwhile, the ramp 312 proceeding into the web 310, and the ramp 322 proceeding into the lower flange 320 transfer load from the stringer. The rate of transition of load through the end cap is established by the geometry and of the ramps and the pattern (e.g., linear, step, etc.) of the ramps.

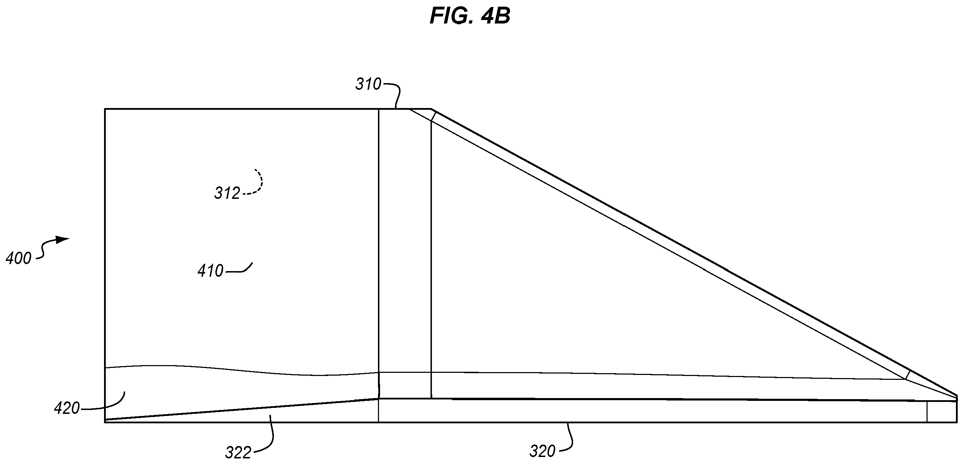

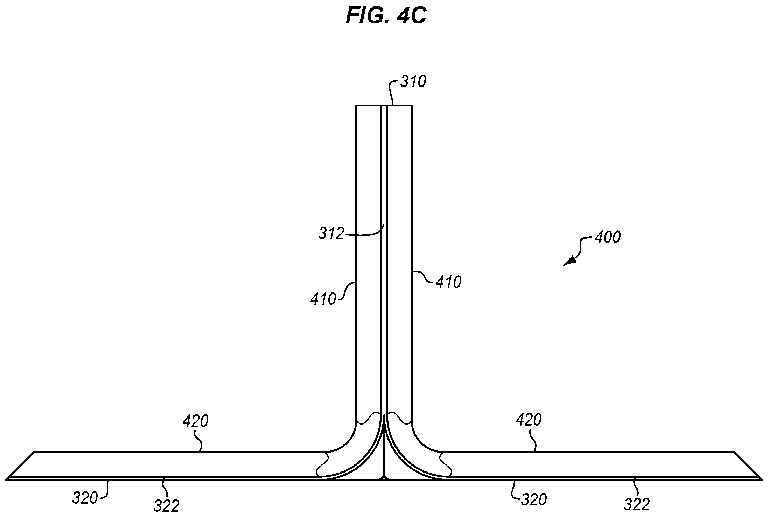

FIG. 4B depicts a section-cut side view of the end cap 300 of FIG. 3, after a stringer 400 has been bonded thereto. FIG. 4B corresponds with view arrows 4B of FIG. 4A. In FIG. 4B, it can be seen that stringer 400 includes ramp 410 and ramp 420, which mate with ramps 312 and 322, respectively. FIG. 4C is a section cut end view that corresponds with view arrows 4C of FIG. 4A. In FIG. 4C ramps 312 and 322 of end cap 300 are visible, as are ramps 410 and 420 of stringer 400. In further embodiments the end cap is bonded to an outboard end of the stringer preform and fastened to the wing panel, and another end cap is bonded to an inboard end of the stringer preform and fastened to the wing panel.

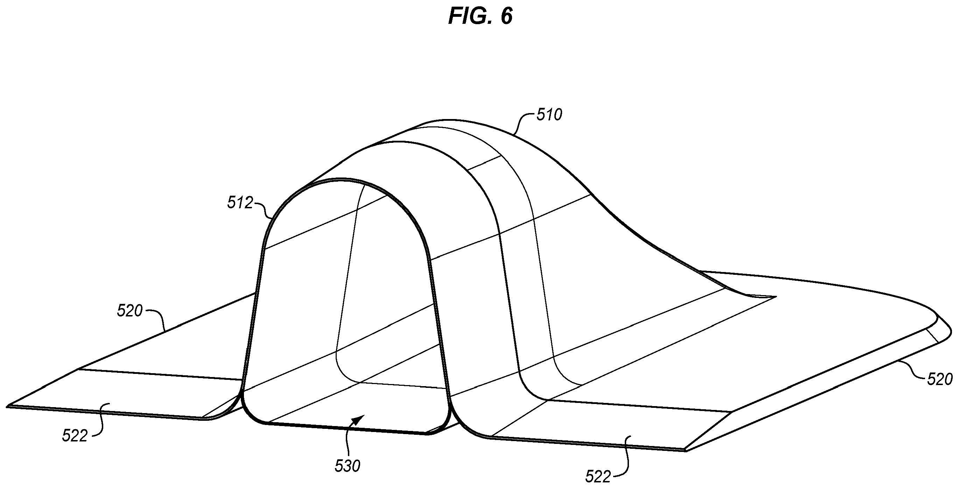

FIGS. 5-6 illustrate an end cap 500 for a second stringer shape in an illustrative embodiment. FIG. 6 corresponds with view arrows 6 of FIG. 5. In this embodiment, the end cap 500 is designed as an end cap for a stringer having a "hat" shaped cross-section. That is, the end cap 500 has a hat-shaped cross-section that aligns with a hat-shaped cross section of a stringer.

The end cap 500 includes an upper arch 510 which narrows via ramp 512, and also includes a lower flange 520, which narrows via ramp 522. These flanges are overlapped by corresponding ramps in the stringer preform, such that an overall thickness of the combination of flange and stringer preform remains constant along the flange. In further embodiments, the ramps exhibit a stairstep pattern as they narrow, instead of narrowing in a linear fashion. Ramp 530 terminates the stringer in accordance with desired structural constraints, and lip 540 distributes forces borne through the end cap 500 into a skin panel (not shown). In this embodiment, the upper arch 510 forms a void 550 which corresponds with a void in the hat stringer.

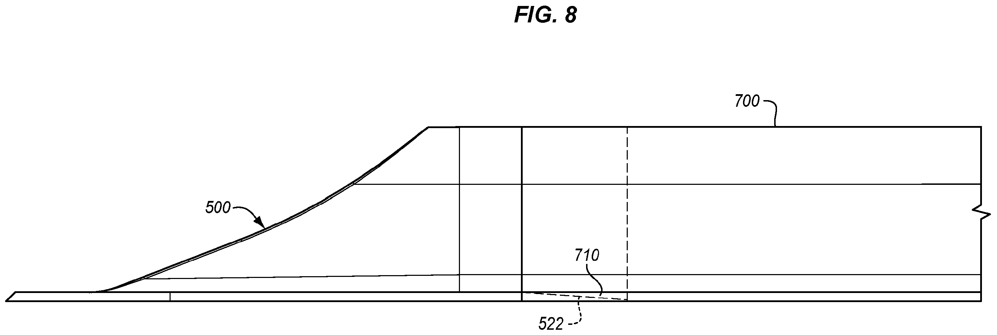

FIGS. 7A-7E and 8 illustrate an end cap 500 that has been co-bonded to a stringer 700 in an illustrative embodiment. FIG. 8 is a side view corresponding with view arrows 8 of FIG. 7A. In this embodiment, ramp 512 and ramp 522 are covered by fiber-reinforced material from the stringer 700, which forms a corresponding instance of a ramp 710 to maintain a desired combined thickness of the stringer and end cap.

FIG. 7B is a section-cut side view that corresponds with view arrows 7B of FIG. 7A, and depicts the ramp 710 intersecting with ramp 522 of FIG. 7A at scarf joint 720. In FIG. 7B, the end cap has been bonded to a ramp of a stringer 700, which structurally unites the stringer 700 with the end cap 500, forming a single component made from the stringer as well as the end cap. Specifically, FIG. 7B depicts a scarf type of join between the ramp of the end cap and the composite plies. However, a step type of join can also be implemented, as depicted by step joint 730 of FIG. 7C. In further embodiments, the end cap is interleaved with composite plies, as shown by interleaved joint 740 of FIG. 7D. Still further implementations of interleaving may also or alternatively be utilized.

FIG. 7E is a section-cut end view that corresponds with view arrows 7E of FIG. 7A. This view further depicts and intersection between ramps for an end cap and ramps for a stringer. As shown in FIG. 7E, a portion of the stringer 700 overlaps with the ramp 512 and ramp 522 of the end cap 500.

FIG. 8 depicts a side view that corresponds with view arrows 8 of FIG. 7A. In FIG. 8, it can be observed that a majority of the join (i.e., proceeding into the page between the ramp 710 and the ramp 522) is hidden from view.

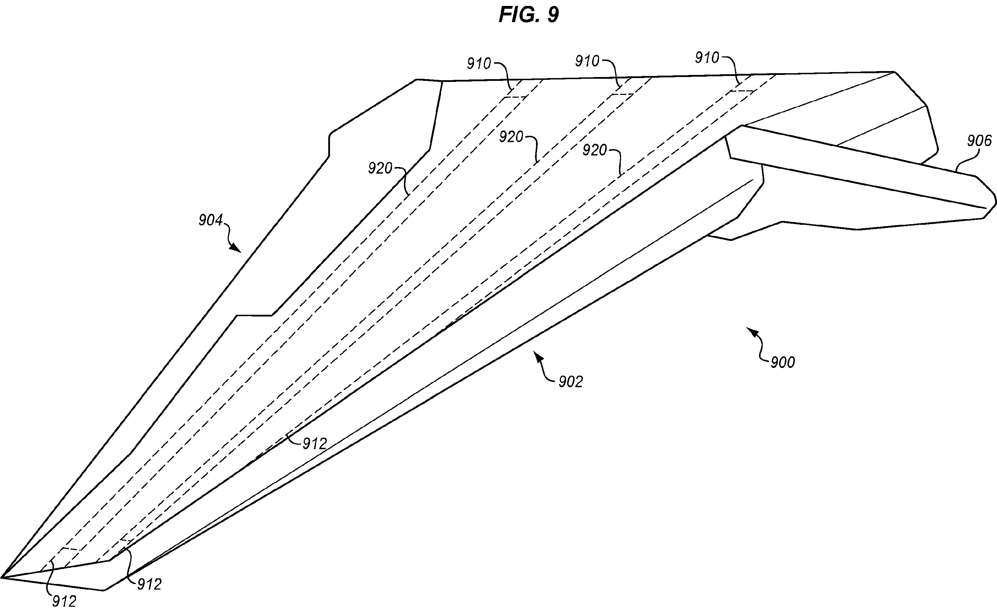

FIG. 9 is a perspective view of a wing 900 that includes flyaway tooling in an illustrative embodiment. The tooling comprises end caps that facilitated hardening of the stringers by supporting the stringers during curing, and that became physically integral with the stringers after hardening. Therefore, the tooling is flyaway tooling because it is integrated into an aircraft and "flies away" as part of the aircraft after fabrication has completed. Thus, each end cap plays a dual role as tooling that supports preforms prior to and during curing, and also as a component that transfers load from the stringer into the panel when integrated into an aircraft.

FIG. 9 illustrates that the wing 900 includes leading edge 902, trailing edge 904, and pylon 906. Wing 900 further includes stringers 920, as well as inboard end caps 910 and outboard end caps 912 disposed at the inboard and outboard ends of the stringers 920. For example, the inboard end caps 910 may terminate a stringer 920 at a side-of-body intersection to form an inboard end of a stringer 920, and the outboard end caps 912 may terminate an outboard end of a stringer 920. In one embodiment, outboard end caps are smaller than inboard end caps, because they mate with tapered portions of the stringers 920. In such an embodiment inboard end caps do not taper into a skin panel, but rather are bonded or fastened to a wing box. Such end caps still taper into the stringers themselves, however. Because FIG. 9 provides a simplified view, it will be understood that there can be many more stringers than illustrated, and stringers can be much narrower relative to wing size. For example, a stringer can taper from inboard end to outboard end. Also, some of the stringers may continue to the tip of the wing while others terminate earlier.

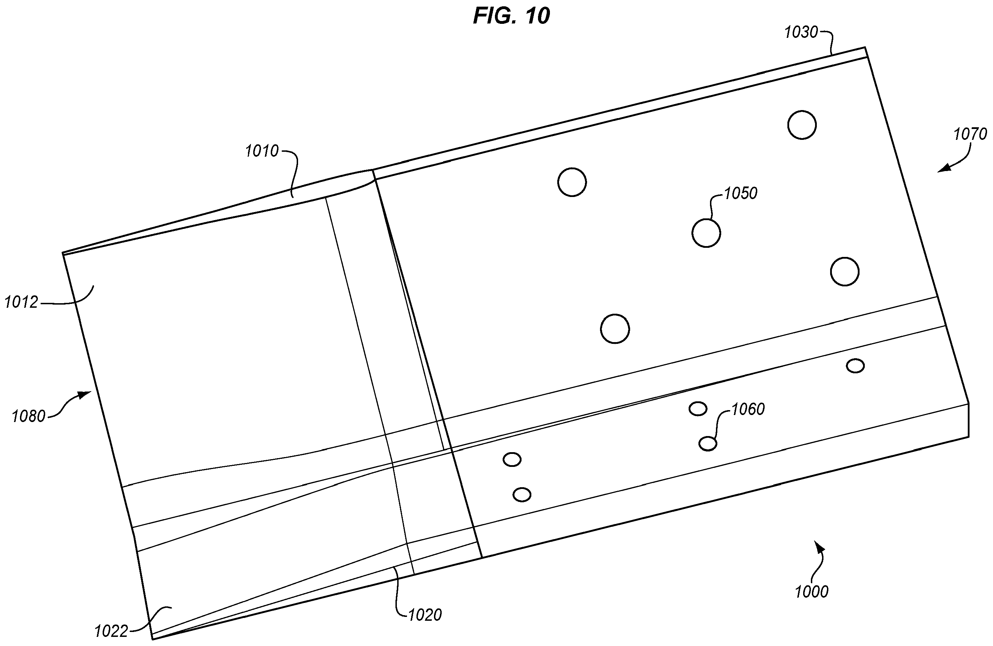

FIG. 10 illustrates an inboard end cap 1000 for a stringer in an illustrative embodiment. In this embodiment, the inboard end cap 1000 is designed as an end cap for a stringer having a T-shaped cross-section. That is, the end cap 1000 has a T-shaped cross-section that aligns with a T-shaped cross section of an inboard end of a stringer.

The inboard end cap 1000 includes a web 1010 which narrows via ramp 1012, which extends from the web 1010 and tapers the web 1010. In this embodiment, the web 1010 forms a vertical plane. The web 1010 protrudes from a lower flange 1020. Lower flange 1020 narrows via ramp 1022, which extends from the lower flange 1020 and tapers the lower flange 1020. These ramps 1012 and 1022 are overlapped by/spliced with corresponding ramps in the stringer preform, such that an overall thickness of the combination of flange and stringer preform remains constant along the flange at end 1080. In further embodiments, the ramps exhibit a stairstep pattern that accommodates a step lap or other type of interface/transition between the stringer and the end cap. In still further embodiments, interleaving of composite plies with metallic structure is performed to narrow the structure instead of narrowing in a linear ramped fashion. Web extension 1030 terminates the stringer by abutting against a side of body intersection at end 1080 to transfer load from a wing box. Meanwhile, the ramp 1012 proceeding into the web 1010, and the ramp 1022 proceeding into the lower flange 1020 transfer load from the stringer to a center of the wing box. The rate of transition of load through the end cap is established by the geometry and of the ramps and the pattern (e.g., linear, step, etc.) of the ramps and web extension.

FIG. 10 further depicts mounting features 1050 in the web and mounting feature 1060 in the flange at the inboard end cap 1000. These mounting features (e.g., bolt holes for fasteners, protrusions, etc.) facilitate the process of affixing the inboard end cap 1000 to a center wing box.

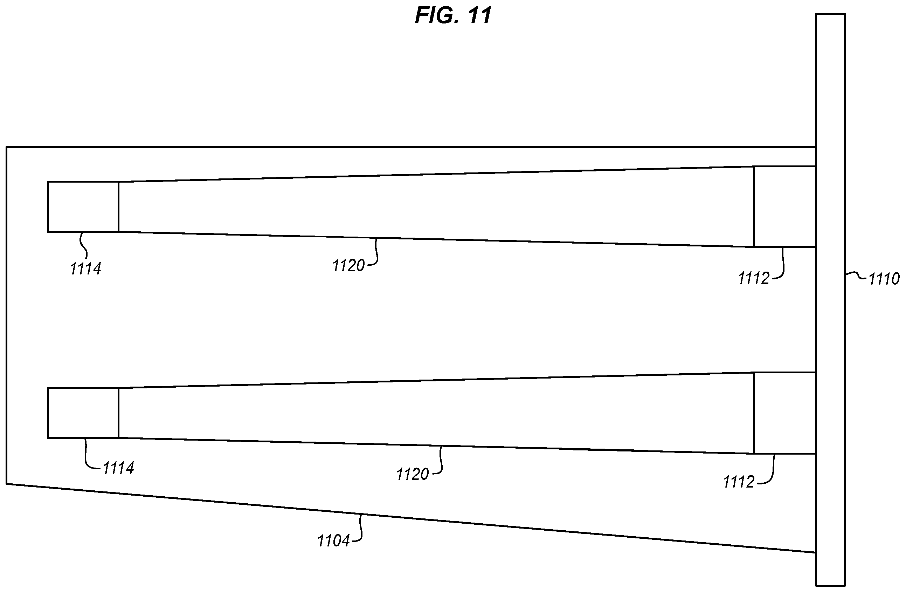

FIG. 11 is a block diagram illustrating inboard end caps for stringers integrated into an airframe in an illustrative embodiment. In FIG. 11, a side of body 1110 of an airframe is abutted by inboard end caps 1112. Stringers 1120 are attached to the inboard end caps 1112, and are also attached to outboard end caps 1114. The stringers 1120 and end caps are also affixed to a skin panel 1104.

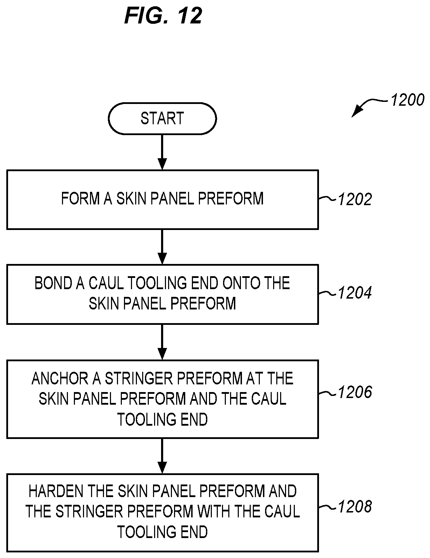

FIG. 12 is a further flowchart illustrating a method for integrating flyaway tooling into a wing in an illustrative embodiment. Step 1202 comprises forming a skin panel preform via layup or other techniques. Step 1204 comprises bonding a caul tooling end (e.g., an end cap) onto the skin panel preform. Step 1206 comprises anchoring a stringer preform at the skin panel preform and the caul tooling end. Step 1208 comprises hardening the skin panel preform and the stringer preform with the caul tooling end. That is, while the skin panel preform and the stringer preform are supported by the caul tooling end, they are hardened into a composite part. In a further embodiment, vacuum bagging is performed prior to hardening, and this process includes vacuum bagging the stringer preform, the caul tooling end, and the skin panel preform. In one embodiment, hardening comprises curing the stringer preform, the caul tooling end, and the skin panel preform into a composite part while applying pressure. In a further embodiment, the caul tooling end forms flyaway tooling that structurally supports ends of a stringer. In a further embodiment, the caul tooling end comprises a material selected from the group consisting of metal and Carbon Fiber Reinforced Polymer (CFRP).

### Examples

In the following examples, additional processes, systems, and methods are described in the context of end caps used as flyaway tooling for stringers.

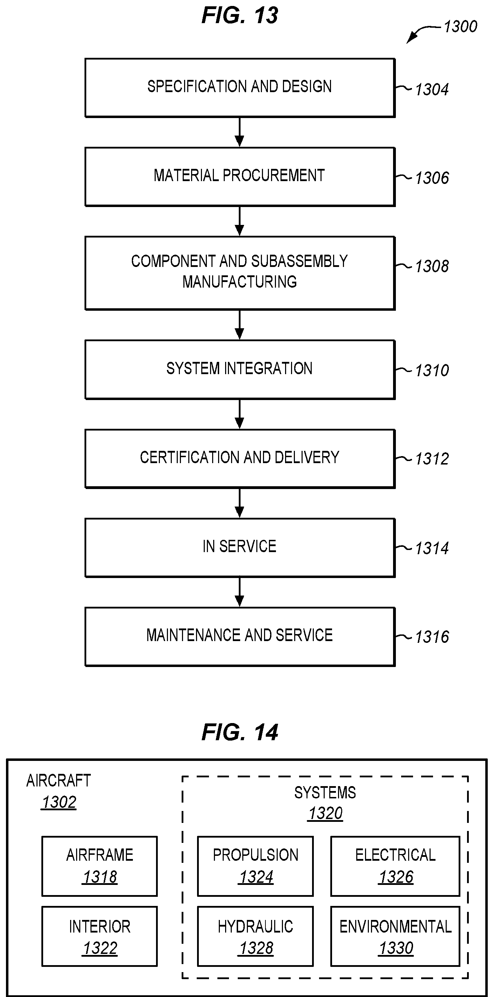

Referring more particularly to the drawings, embodiments of the disclosure may be described in the context of aircraft manufacturing and service in method 1300 as shown in FIG. 13 and an aircraft 1302 as shown in FIG. 14. During pre-production, method 1300 may include specification and design 1304 of the aircraft 1302 and material procurement 1306. During production, component and subassembly manufacturing 1308 and system integration 1310 of the aircraft 1302 takes place. Thereafter, the aircraft 1302 may go through certification and delivery 1312 in order to be placed in service 1314. While in service by a customer, the aircraft 1302 is scheduled for routine work in maintenance and service 1316 (which may also include modification, reconfiguration, refurbishment, and so on). Apparatus and methods embodied herein may be employed during any one or more suitable stages of the production and service described in method 1200 (e.g., specification and design 1304, material procurement 1306, component and subassembly manufacturing 1308, system integration 1310, certification and delivery 1312, service 1314, maintenance and service 1316) and/or any suitable component of aircraft 1302 (e.g., airframe 1318, systems 1320, interior 1322, propulsion system 1324, electrical system 1326, hydraulic system 1328, environmental 1330).

Each of the processes of method 1300 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 14, the aircraft 1302 produced by method 1300 may include an airframe 1318 with a plurality of systems 1320 and an interior 1322. Examples of systems 1320 include one or more of a propulsion system 1324, an electrical system 1326, a hydraulic system 1328, and an environmental system 1330. Any number of other systems may be included. Although an aerospace example is shown, the principles of the invention may be applied to other industries, such as the automotive industry.

As already mentioned above, apparatus and methods embodied herein may be employed during any one or more of the stages of the production and service described in method 1300. For example, components or subassemblies corresponding to component and subassembly manufacturing 1308 may be fabricated or manufactured in a manner similar to components or subassemblies produced while the aircraft 1302 is in service. Also, one or more apparatus embodiments, method embodiments, or a combination thereof may be utilized during the subassembly manufacturing 1308 and system integration 1310, for example, by substantially expediting assembly of or reducing the cost of an aircraft 1302. Similarly, one or more of apparatus embodiments, method embodiments, or a combination thereof may be utilized while the aircraft 1302 is in service, for example and without limitation during the maintenance and service 1316. Thus, the invention may be used in any stages discussed herein, or any combination thereof, such as specification and design 1304, material procurement 1306, component and subassembly manufacturing 1308, system integration 1310, certification and delivery 1312, service 1314, maintenance and service 1316 and/or any suitable component of aircraft 1302 (e.g., airframe 1318, systems 1320, interior 1322, propulsion system 1324, electrical system 1326, hydraulic system 1328, and/or environmental 1330.)

In one embodiment, a part comprises a portion of airframe 1318, and is manufactured during component and subassembly manufacturing 1308. The part may then be assembled into an aircraft in system integration 1310, and then be utilized in service 1314 until wear renders the part unusable. Then, in maintenance and service 1316, the part may be discarded and replaced with a newly manufactured part. Inventive components and methods may be utilized throughout component and subassembly manufacturing 1308 in order to manufacture new parts.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

Although specific embodiments are described herein, the scope of the disclosure is not limited to those specific embodiments. The scope of the disclosure is defined by the following claims.

## Claims

1. An apparatus in the form of an end cap for a stringer, the end cap comprising:
a flange (320, 1020);
a ramp (322, 1022) that extends from the flange and tapers the flange;
a web (310, 1010) that protrudes from the flange; and
a ramp (312, 1012) that extends from the web and tapers the web;
wherein the ramps (322, 1022, 312, 1012) are configured to be overlapped by corresponding ramps in the stringer preform, such that an overall thickness of the combination of flange (320, 1020) and stringer preform remains constant along the flange (320, 1020).

2. The apparatus of claim 1 wherein:
a cross section of the end cap is a "T" shape.

3. The apparatus of claim 1, wherein the cross section of the end cap is a hat shape.

4. The apparatus according to claims 1 to 3 wherein:
the web (310) forms a curved shape.

5. The apparatus according to any one of claims 1 to 4 wherein:
the end cap is made from Carbon Fiber Reinforced Polymer (CFRP).

6. The apparatus according to any one of claims 1 to 5, wherein the end cap is made from metal.

7. The apparatus according to any one of claims 1 to 6 wherein:
the end cap includes mounting features in a flange.

8. The apparatus according to any one of claims 1 to 7 wherein:
the end cap includes mounting features in a web.

9. An apparatus in the form of flyaway tooling for an aircraft, the apparatus comprising:
an end cap according to any one of claims 1 to 8, wherein the end cap is configured to support a preform for a stringer during fabrication, and is configured to be integrated into a completed stringer as a component of the aircraft.

10. The apparatus of claim 1, further comprising a wing panel, wherein the end cap is bonded to an outboard end of the stringer preform and fastened to the wing panel.

11. The apparatus of claim 10, further comprising another end cap bonded to an inboard end of the stringer preform and fastened to the wing panel.

12. The apparatus according to claim 1, wherein the end cap is an inboard end cap, the apparatus further comprising a wing box and a web extension (1030), wherein the web extension (1030) terminates the stringer by abutting against a side of body intersection at an end of the stringer to transfer load from the wing box, and the ramps (1012, 1022) are configured to transfer load from the stringer to a center of the wing box.

13. The apparatus of any preceding claim, wherein the ramps (322, 1022, 312, 1012) are selected from the group consisting of step laps, linear ramps, scarfing, and interleaving.

14. A method of fabricating a portion of an aircraft using an apparatus in the form of an end cap for a stringer, the end cap comprising:
a flange (320, 1020);
a ramp (322, 1022) that extends from the flange and tapers the flange;
a web (310, 1010) that protrudes from the flange; and
a ramp (312, 1012) that extends from the web and tapers the web
wherein the ramps (322, 1022, 312, 1012) are overlapped by corresponding ramps in the stringer preform, such that an overall thickness of the combination of flange (320, 1020) and stringer preform remains constant along the flange (320, 1020).

15. The method of claim 14, wherein end cap is a "T" shape or a hat shape.

## Patentansprüche

1. Einrichtung in Form einer Endkappe für einen Stringer, wobei die Endkappe umfasst:
einen Flansch (320, 1020);
eine Rampe (322, 1022), die sich von dem Flansch erstreckt und den Flansch verjüngt;
einen Steg (310, 1010), der von dem Flansch hervorsteht; und
eine Rampe (312, 1012), die sich von dem Steg erstreckt und den Steg verjüngt;
wobei die Rampen (322, 1022, 312, 1012) ausgebildet sind, um von entsprechenden Rampen in dem Stringer-Vorformling überlappt zu werden, sodass eine Gesamtdicke der Kombination aus Flansch (320, 1020) und Stringer-Vorformling entlang des Flansches (320, 1020) konstant bleibt.

2. Einrichtung nach Anspruch 1, wobei:
ein Querschnitt der Endkappe eine "T"-Form ist.

3. Einrichtung nach Anspruch 1, wobei der Querschnitt der Endkappe eine Hutform ist.

4. Einrichtung nach den Ansprüchen 1 bis 3, wobei:
der Steg (310) eine gekrümmte Form bildet.

5. Einrichtung nach einem der Ansprüche 1 bis 4, wobei:
die Endkappe aus kohlenstofffaserverstärktem Polymer (CFRP) hergestellt ist.

6. Einrichtung nach einem der Ansprüche 1 bis 5, wobei die Endkappe aus Metall hergestellt ist.

7. Einrichtung nach einem der Ansprüche 1 bis 6, wobei:
die Endkappe Montagemerkmale in einem Flansch einschließt.

8. Einrichtung nach einem der Ansprüche 1 bis 7, wobei:
die Endkappe Montagemerkmale in einem Steg einschließt.

9. Einrichtung in Form von Flyaway-Werkzeug für ein Flugzeug, wobei die Einrichtung umfasst:
eine Endkappe nach einem der Ansprüche 1 bis 8, wobei die Endkappe ausgebildet ist, um bei der Herstellung einen Vorformling für einen Stringer zu stützen, und ausgebildet ist, um als eine Komponente des Flugzeugs in einen fertiggestellten Stringer integriert zu werden.

10. Einrichtung nach Anspruch 1, weiter umfassend ein Flügelpaneel, wobei die Endkappe mit einem außenliegenden Ende des Stringer-Vorformlings verklebt und an dem Flügelpaneel befestigt ist.

11. Einrichtung nach Anspruch 10, weiter umfassend eine weitere Endkappe, die mit einem innenliegenden Ende des Stringer-Vorformlings verklebt und an dem Flügelpaneel befestigt ist.

12. Einrichtung nach Anspruch 1, wobei die Endkappe eine innenliegende Endkappe ist, wobei die Einrichtung weiter einen Flügelkasten und eine Stegverlängerung (1030) umfasst, wobei die Stegverlängerung (1030) den Stringer durch Anliegen an einen Körperseitenschnittpunkt an einem Ende des Stringers abschließt, um Last aus dem Flügelkasten zu übertragen, und die Rampen (1012, 1022) ausgebildet sind, um Last vom Stringer in eine Mitte des Flügelkastens zu übertragen.

13. Einrichtung nach einem vorstehenden Anspruch, wobei die Rampen (322, 1022, 312, 1012) aus der Gruppe bestehend aus Stufenüberlappungen, linearen Rampen, Schäftungen und Verschachtelung ausgewählt sind.

14. Verfahren zum Herstellen eines Abschnitts eines Flugzeugs unter Verwendung einer Einrichtung in Form einer Endkappe für einen Stringer, wobei die Endkappe umfasst:
einen Flansch (320, 1020);
eine Rampe (322, 1022), die sich von dem Flansch erstreckt und den Flansch verjüngt;
einen Steg (310, 1010), der von dem Flansch hervorsteht; und
eine Rampe (312, 1012), die sich von dem Steg erstreckt und den Steg verjüngt
wobei die Rampen (322, 1022, 312, 1012) durch entsprechende Rampen in dem Stringer-Vorformling überlappt sind, sodass eine Gesamtdicke der Kombination aus Flansch (320, 1020) und Stringer-Vorformling entlang des Flansches (320, 1020) konstant bleibt.

15. Verfahren nach Anspruch 14, wobei die Endkappe eine "T"-Form oder eine Hutform ist.

## Revendications

1. Appareil sous la forme d'un embout pour un longeron, l'embout comprenant :
une semelle (320, 1020) ;
une rampe (322, 1022) qui s'étend depuis la semelle et amincit progressivement la semelle ;
une âme (310, 1010) qui fait saillie à partir de la semelle ; et
une rampe (312, 1012) qui s'étend depuis l'âme et amincit progressivement l'âme ;
dans lequel les rampes (322, 1022, 312, 1012) sont configurées pour être chevauchées par des rampes correspondantes dans la préforme de longeron, de sorte qu'une épaisseur globale de la combinaison de la semelle (320, 1020) et de la préforme de longeron demeure constante le long de la semelle (320, 1020).

2. Appareil selon la revendication 1, dans lequel :
une section transversale de l'embout est une section transversale en forme de « T ».

3. Appareil selon la revendication 1, dans lequel la section transversale de l'embout est une section transversale en forme de chapeau.

4. Appareil selon les revendications 1 à 3, dans lequel :
l'âme (310) forme une forme incurvée.

5. Appareil selon l'une quelconque des revendications 1 à 4, dans lequel :
l'embout est réalisé en polymère renforcé de fibres de carbone (CFRP).

6. Appareil selon l'une quelconque des revendications 1 à 5, dans lequel l'embout est réalisé en métal.

7. Appareil selon l'une quelconque des revendications 1 à 6, dans lequel :
l'embout inclut des éléments de montage dans une semelle.

8. Appareil selon l'une quelconque des revendications 1 à 7, dans lequel :
l'embout inclut des éléments de montage dans une âme.

9. Appareil sous la forme d'un outillage volant pour un aéronef, l'appareil comprenant :
un embout selon l'une quelconque des revendications 1 à 8, dans lequel l'embout est configuré pour supporter une préforme pour un longeron pendant la fabrication, et est configuré pour être intégré dans un longeron achevé en tant que composant de l'aéronef.

10. Appareil selon la revendication 1, comprenant en outre un panneau d'aile, dans lequel l'embout est lié à une extrémité extérieure de la préforme de longeron et fixé au panneau d'aile.

11. Appareil selon la revendication 10, comprenant en outre un autre embout lié à une extrémité intérieure de la préforme de longeron et fixé au panneau d'aile.

12. Appareil selon la revendication 1, dans lequel l'embout est un embout intérieur, l'appareil comprenant en outre un caisson de voilure et une extension d'âme (1030), dans lequel l'extension d'âme (1030) termine le longeron en venant en butée contre une intersection voilure-fuselage à une extrémité du longeron pour transférer une charge depuis le caisson de voilure, et les rampes (1012, 1022) sont configurées pour transférer une charge depuis le longeron vers un centre du caisson de voilure.

13. Appareil selon l'une quelconque des revendications précédentes, dans lequel les rampes (322, 1022, 312, 1012) sont sélectionnées dans le groupe constitué par des recouvrements en gradin, des rampes linéaires, un écriquage au chalumeau et un entrelacement.

14. Procédé de fabrication d'une partie d'un aéronef utilisant un appareil sous la forme d'un embout pour un longeron, l'embout comprenant :
une semelle (320, 1020) ;
une rampe (322, 1022) qui s'étend depuis la semelle et amincit progressivement la semelle ;
une âme (310, 1010) qui fait saillie à partir de la semelle ; et
une rampe (312, 1012) qui s'étend depuis l'âme et amincit progressivement l'âme,
dans lequel les rampes (322, 1022, 312, 1012) sont chevauchées par des rampes correspondantes dans la préforme de longeron, de sorte qu'une épaisseur globale de la combinaison de la semelle (320, 1020) et de la préforme de longeron demeure constante le long de la semelle (320, 1020).

15. Procédé selon la revendication 14, dans lequel l'embout est un embout en forme de « T » ou en forme de chapeau.
